# EUROPEAN PATENT APPLICATION

(11) **EP 2 164 166 A1**
(43) Date of publication of application: **17.03.2010**
(21) Application number: 09010349.0
(22) Date of filing: 11.08.2009
(51) Int. Cl.: H02P 7/28, H02P 7/29, G05F 1/10, H02M 1/08

(54) **Motor controller**

(30) Priority: 12.09.2008 JP 2008234638
(71) Applicant: Alps Electric Co., Ltd., Tokyo 145-8501 (JP)
(72) Inventor: Shigeru, Furuki, Tokyo, 145-8501 (JP); Noriyuki, Fukushima, Tokyo, 145-8501 (JP)
(74) Representative: Schraud, Robert Alexander

(57) **Abstract**

A motor controller includes a motor drive circuit and a control circuit. The control circuit outputs a drive signal having a pulse width, which indicates a period of time where the drive state of the motor is kept, to the motor drive circuit on the basis of an instruction value of torque generated in the motor. The control circuit sets the maximum value of drive current supplied to the motor. The control circuit has a constant-current control phase where the pulse width of the drive signal is defined as a period of time between the time when power begins to be supplied to the motor and the time when a value of actual drive current reaches the maximum value, and a constant-voltage control phase where the pulse width of the drive signal is defined to be equal to the pulse width of a modulated instruction value while the actual drive current of the motor does not reach the maximum value.

## Description

### Cross Reference to Related Application

The present invention contains subject matter related to Japanese Patent Application No. 2008-234638 filed in the Japanese Patent Office on September 12, 2008, the entire contents of which being incorporated herein by reference.

### BACKGROUND

### 1. Technical Field

The present invention relates to a motor controller that is suitable for controlling the drive of a motor in a relatively wide torque band.

### 2. Related Art

For example, in the past, there has been known a motor drive controller where an operation member, which is touched by the hand of a user, is directly connected to a rotating shaft of a motor. The motor drive controller has a function of transmitting a kinesthetic sense to the operation member by the torque of the motor (for example, see Japanese Unexamined Patent Application Publication No. 2006-197669). If a detection signal of drive current reaches a target current value while the motor drive controller drives the motor at regular intervals, the motor drive controller maintains the drive current of the motor at the target current value by performing a control that switches the state of the motor to a non-drive state.

According to the above-mentioned motor drive controller, since it may be possible to control the drive of the motor without detecting regenerative current, it is not necessary to provide a reverse-current preventing diode to each switching element. Accordingly, it may be possible to suppress an increase in the number of parts. Further, since an H-type bridge circuit is formed by using a MOSFET in a switching element, the motor drive controller has an advantage of suppressing loss during the drive in comparison with the circuit configuration that uses a bipolar transistor of Darlington connection.

The above-mentioned motor drive controller triggers ON-signals that are generated at regular intervals and comparison output signals, and controls the switching operation of the latching H-type bridge circuit. For this reason, since the motor drive controller is superior in terms of being able to perform a constant current control without separately detecting regenerative current, the technical value thereof remains high.

In addition, the inventors of the invention have made another modification focusing on the point that control does not effectively function unless a current detection signal is generated in the method in the related art when drive current begins to be actually supplied to the motor.

That is, since some filters (for example, bypass capacitors), which are used as countermeasures against noise, need to be provided on a feedback path of a current detection signal, there is a certain response delay in the detection signal compared with the actual drive current. For this reason, the minimum driving time when the motor should be driven is the time until the state of the motor is switched to a non-drive state by detecting that the drive current has reached a target value after the motor begins to be driven by an ON-signal. Accordingly, there is theoretically a limitation that a motor may not be driven for the time shorter that the minimum driving time in a constant current control. This limitation makes it difficult for the control to be performed in a very low torque band.

### SUMMARY

An advantage of some aspects of the invention is to provide a technique that can control the torque of the motor in a wide torque band without being limited by the response delay of a current detection signal.

The invention employs the following means.

According to an aspect of the invention, a motor controller includes a motor drive circuit and a control circuit. The motor drive circuit controls power to be supplied to a motor that is an object to be controlled, and switches the state of the motor to any one of a drive state and a non-drive state. If a torque instruction signal is input in a pulse width corresponding to an instruction value of torque generated in the motor, the control circuit outputs a drive signal having a pulse width, which indicates a period of time where the drive state of the motor is kept, to the motor drive circuit on the basis of the instruction value. The control circuit has the following characteristics.

The control circuit sets the maximum value of drive current supplied to the motor on the basis of the torque instruction signal. The control circuit has a constant-current control phase where the pulse width of the drive signal is defined as a period of time between the time when power begins to be supplied to the motor and the time when a value of actual drive current reaches the maximum value, and a constant-voltage control phase where the pulse width of the drive signal is defined to be equal to the pulse width of a pulse width-modulated torque instruction signal while the actual drive current of the motor does not reach the maximum value.

In the motor controller according to the aspect of the invention, the torque generated in the motor is basically instructed by a pulse-shaped torque instruction signal, and the pulse width of the torque instruction signal is determined by the magnitude (instruction value) of torque. For this reason, the pulse width is increased by as much as the instructed torque in a band where instructed torque is high. In contrast, the pulse width is decreased by as much as the instructed torque in a band where instructed torque is low. Meanwhile, if the output period of the torque instruction signal is constant, the waveform of the torque instruction signal is the waveform of a width-modulated high-frequency pulse and the magnitude of torque instructing the motor on the control is proportional to a duty ratio.

However, in this aspect of the invention, the motor is not driven only by the duty ratio of the torque instruction signal. The control circuit selectively uses the constant-current control phase that switches the state of the motor to the non-drive state when power begins to be actually supplied to the motor (the state of motor is switched to the drive state) after the maximum value of the drive current is set from the torque instruction signal and the drive current reaches the maximum value, and the constant-voltage control phase that defines the pulse width of the torque instruction signal as the pulse width of the drive signal of the motor while the drive current does not reach the maximum value.

For this reason, according to the motor controller of the aspect of the invention, for example, if the driving time of the motor (time when the state of the motor is switched to the drive state) is very short, the control circuit may generate the torque, which is instructed by the torque instruction signal, in the motor without being limited to the response delay time that is required for detecting the drive current of the motor by defining the pulse width of the drive signal in the constant-voltage control phase. Meanwhile, if the driving time of the motor is long to some extent, the control circuit may generate the torque, which is instructed by the torque instruction signal, in the motor while maintaining the drive current of the motor near a target value by defining the pulse width of the drive signal in the constant-current control phase.

As described above, in this aspect of the invention, the limitation on the control, which is caused by the detection response delay, is compensated by selectively using the constant-current control phase and constant-voltage control phase as occasion demands. Accordingly, it may be possible to widely control the torque that is generated in the motor.

For example, the control circuit may selectively use the following two control phases.
(1) The control circuit performs the constant-voltage control phase in a low torque band where torque corresponding to the instruction value is obtained depending on the drive voltage of the motor even though a value of the drive current of the motor does not reach the maximum value.
(2) The control circuit performs the constant-current control phase in a high torque band where the torque corresponding to the instruction is obtained by increasing the value of the drive current of the motor to the maximum value if the torque corresponding to the instruction value is not obtained in the low torque band.

If the two control phases are selectively used in the above-mentioned pattern, it may be possible to exert linear torque characteristics according to the drive voltage by minutely driving (ON/OFF) the motor according to the torque instruction signal in the low torque band. Further, in the high torque band, it may be possible to supply the drive current to the motor in one burst to achieve the torque that is instructed by the torque instruction signal and to improve the drive response of the motor.

Preferably, the control circuit may have the following configuration.

The control circuit includes a PWM generator, a filter, a comparator, an edge extracting unit, a latch circuit, and a logic gate. The PWM generator outputs a torque instruction signal that is obtained through the pulse-width-modulation of the instruction value of torque. The filter filters the torque instruction signal, and outputs the maximum value signal indicating a voltage value corresponding to the maximum value. The comparator compares the maximum value signal with a current feedback signal indicating a voltage value proportional to the actual drive current of the motor, and outputs a result signal indicating a voltage value corresponding to the comparison result. The edge extracting unit outputs an edge extraction signal indicating that there has been a rising edge of the input torque instruction signal. The latch circuit outputs a latch signal keeping the ON-state of the input edge extraction signal, and outputs a latch signal keeping the OFF-state of the input result signal. The logic gate outputs the drive signal corresponding to an ON-state while both the torque instruction signal and the latch signal are in the ON-state.

According to the above-mentioned circuit configuration, the input torque instruction signal is converted into the maximum value signal by the filter. Further, in the latch circuit, one ON-signal corresponding to the logic gate is triggered and latched, and becomes the other input signal corresponding to the logic gate. This is based on the point that the waveform of the torque instruction signal represents the magnitude of the torque to be originally instructed and an early period for switching the state of the motor to the drive state of the motor is defined.

Accordingly, if the torque instruction signal is input when the drive current is not supplied to the motor (non-drive state), a rising edge is firstly extracted in the edge extracting unit and a latch signal is latched in the ON-state on the basis of an edge extraction signal. The latch signal and the torque instruction signal are input to the logic gate, and logically operated at the logic gate, so that a drive signal is output. This is the rising edge (early period of the pulse width) of the drive signal, and the drive circuit begins to supply power to the motor.

In this case, which phase does the control circuit perform is simply and naturally (analogically) selected depending on the pulse width of the torque instruction signal. That is, if the pulse width of the torque instruction signal is relatively small, the torque instruction signal tends to fall before the current feedback signal of the comparator reaches the maximum value. In this case, since only the torque instruction signal is in the OFF-state before the latch signal is latched in the OFF-state, the logic gate switches the state of the drive signal to the OFF-state from the ON-state. As a result, since the pulse width of the drive signal is equal to the pulse width of the torque instruction signal, the control circuit selects the constant-voltage control phase.

In contrast, if the pulse width of the torque instruction signal is relatively large, the drive current is increased before the torque instruction signal falls and the current feedback signal of the comparator reaches the maximum value. In this case, since the state of the latch signal is switched to the OFF-state before the state of the torque instruction signal is switched to the OFF-state, the logic gate switches the state of the drive signal to the OFF-state from the ON-state at this time. As a result, since the pulse width of the drive signal is defined as a pulse width until the time when the drive current reaches the maximum value from the rising edge of the torque signal, the control circuit selects the constant-current control phase.

As described above, the control circuit may control the drive of the motor while selectively and naturally switching two control phases without any particular switching operations. It may be possible to finely and linearly control the torque of the motor in the low torque band, and to control the torque of the motor with excellent response in the high torque band. Further, even though there are various changes in the pulse width of the torque instruction signal, it may be possible to perform control while smoothly switching the control phase. Accordingly, the behavior of the motor is smoothly changed.

The motor controller according to the aspect of the invention can control the drive of the motor over a wide torque band. For this reason, the motor controller according to the aspect of the invention may be suitable for the smooth behavior of a motor, that is, for intermittently generating small torque by one motor so that a catching feeling is transmitted to a user, or rapidly increasing torque so as to transmit resistance when large operating force is applied to the device, for example, like in an operation feeling transmitting input device.

### BRIEF DESCRIPTION OF THE DRAWINGS

Fig. 1 is a block diagram schematically showing the circuit configuration of a motor controller according to an embodiment of the invention'.
Fig. 2 is a timing chart showing examples of waveforms of various signals generated when a motor is driven in a relatively low torque band.
Fig. 3 is a timing chart showing examples of waveforms of various signals generated when a motor is driven in a relatively high torque band.
Fig. 4 is a characteristic diagram showing a relationship between generated torque and the drive current or voltage of the motor.

### DESCRIPTION OF EXEMPLARY EMBODIMENTS

An embodiment of the invention will be described below with reference to drawings.

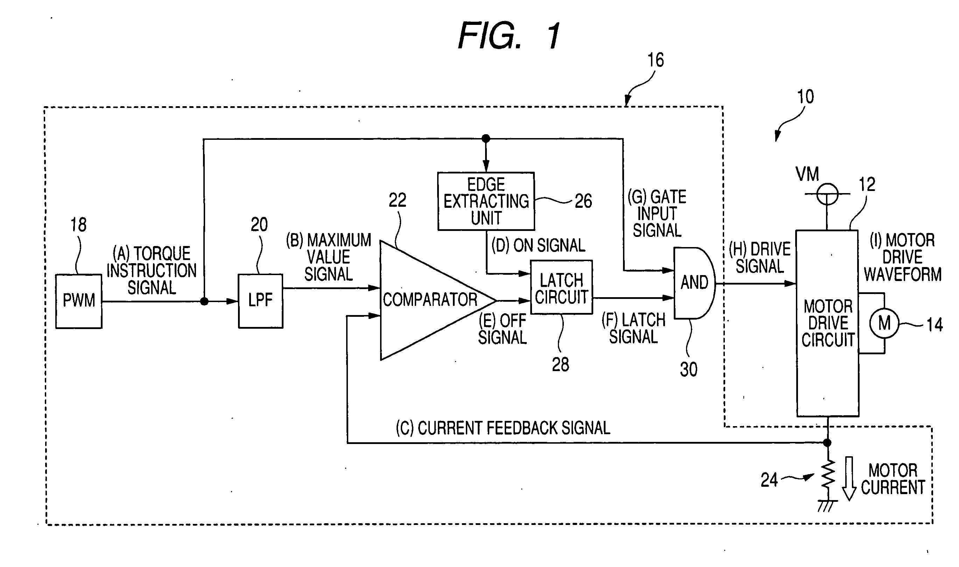

Fig. 1 is a block diagram schematically showing the circuit configuration of a motor controller 10 according to an embodiment of the invention. The motor controller 10 mainly controls the torque of a motor 14 that is an object to be controlled, and mainly includes a motor drive circuit 12 and a control circuit 16. Meanwhile, the motor 14 that is an object to be controlled is, for example, a DC motor with brush herein, but is not limited thereto.

### [DRIVE CIRCUIT]

The motor drive circuit 12 controls the power to be supplied to the motor 14, and switches the state of the motor 14 to a drive state or a non-drive state. In Fig. 1, the motor drive circuit is shown merely as a block element. The motor drive circuit 12 includes an H-type bridge using, for example, four MOSFETs (not shown), and may drive the motor 14 in a normal or reverse direction by switching these MOSFETs. For example, if the states of two MOSFETs of the motor drive circuit 12 corresponding to the normal direction are simultaneously switched to an ON-state so that a power supply path is formed, a drive voltage (VM in Fig. 1) is applied to the motor drive circuit. Accordingly, the motor 14 is in the drive state. If the state of the MOSFET positioned upstream on the power supply path is switched to an OFF-state, the application of the drive voltage is stopped. Accordingly, the motor 14 is in the non-drive state. In this case, a regenerative path is formed in the motor drive circuit 12, so that the motor 14 brakes. Meanwhile, since a known operation may be applied to the switching operation using the H-type bridge, the detailed description thereof will be omitted herein.

### [CONTROL CIRCUIT]

The control circuit 16 outputs a drive signal to the motor drive circuit 12, and controls the switching operation of the MOSFET by the motor drive circuit 12. The motor drive circuit 12 performs the switching operation on the basis of the drive signal (ON/OFF) that is input from the control circuit 16.

### [PWM GENERATOR]

The control circuit 16 includes, for example, a PWM (Pulse Width Modulation) generator 18. The PWM generator 18 generates a torque instruction signal ((A) in Fig. 1) in the waveform of a high-frequency pulse. An instruction value (for example, digital signal) of torque is input to the PWM generator 18 from, for example, a controller (not shown). The PWM generator 18 performs the pulse width modulation of the input instruction value and outputs a torque instruction signal. In this case, the pulse width of the torque instruction signal is set as a duty ratio corresponding to the instruction value of torque.

### [FILTER]

Further, the control circuit 16 includes, for example, an LPF (low-pass filter) 20 at the rear end of the PWM generator 18. The LPF 20 filters the input torque instruction signal and generates a maximum value signal ((B) in Fig. 1). The maximum value signal indicates a voltage value that corresponds to the maximum value of the drive current supplied to the motor 14, and has a value that is generally proportional to the pulse width (duty ratio) of the torque instruction signal. Accordingly, if the instruction value of original torque is large, the level of the maximum value signal also is high. In contrast, if the instruction value of torque is small, the level of the maximum value signal is low.

### [COMPARATOR]

In addition, the control circuit 16 includes a comparator 22 at the rear end of the LPF 20. For example, the maximum value signal is input to a non-inverting terminal of the comparator 22. Further, a drive current detecting resistor 24 is connected to the motor drive circuit 12, and the drive current detected by the drive current detecting resistor 24 is input to an inverting input terminal' of the comparator 22 as a current feedback signal ((C) in Fig. 1). Meanwhile, although not shown, a denoising filter (bypass capacitor) is provided on the line of a current feedback signal.

The comparator 22 compares the input the input maximum value signal with the current feedback signal, and outputs an OFF-signal ((E) in Fig. 1) as a result signal that indicates a voltage value corresponding to the comparison result of the comparator. In this embodiment, the result signal is the minimum voltage level if the voltage value of the maximum value signal is larger than the voltage value of the current feedback signal, but the result signal is the maximum voltage level if the voltage value of the current feedback signal reaches the voltage value of the maximum value signal. In the control circuit 16, the minimum voltage level signal at this time is used as the OFF-signal.

### [EDGE EXTRACTING UNIT]

Further, the control circuit 16 includes an edge extracting unit 26, and the edge extracting unit 26 is also disposed at the rear end of the PWM generator 18. If the torque instruction signal (pulse waveform) is input to the edge extracting unit 26 from the PWM generator 18, the edge extracting unit 26 outputs an ON-signal ((D) in Fig. 1) as an edge extraction signal indicating that there has been a rising edge of the torque instruction signal.

### [LATCH CIRCUIT]

A latch circuit 28 is provided at the rear end of the edge extracting unit 26 and at the rear end of the comparator 22. If an ON-signal is output from the edge extracting unit 26, the latch circuit 28 output a latch signal ((F) in Fig. 1) while keeping the latch signal in the ON-state. If an OFF-signal is output from the comparator 22, the latch circuit keeps the latch signal in the OFF-state.

### [LOGIC GATE]

Further, the control circuit 16 includes an AND gate 30 that is used as an output gate of the drive signal. The torque instruction signal is input to the AND gate 30 from the PWM generator 18, and the latch signal is input to the AND gate 30 from the latch circuit 28. Meanwhile, the torque instruction signal is input to the AND gate 30 in the waveform of an original pulse. However, the torque instruction signal is treated as a gate input signal ((G) in Fig. 1), which indicates a logical value, at the AND gate 30.

For this reason, while both the torque instruction signal (gate input signal) and the latch signal are in an ON-state, the AND gate 30 outputs a drive signal ((H) in Fig. 1). If any one of the torque instruction signal (gate input signal) and the latch signal is in an OFF-state, the AND gate 30 turns off the drive signal.

While the drive signal is turned on, the motor drive circuit 12 supplies power to the motor 14. For this reason, a motor drive waveform ((I) in Fig. 1), which represents the drive state or non-drive state of the motor 14, is the same as the waveform of the drive signal.

### [OPERATION EXAMPLE]

The motor drive circuit 12 of this embodiment will be described below by means of a specific operation example.

### [CONSTANT-VOLTAGE CONTROL PHASE]

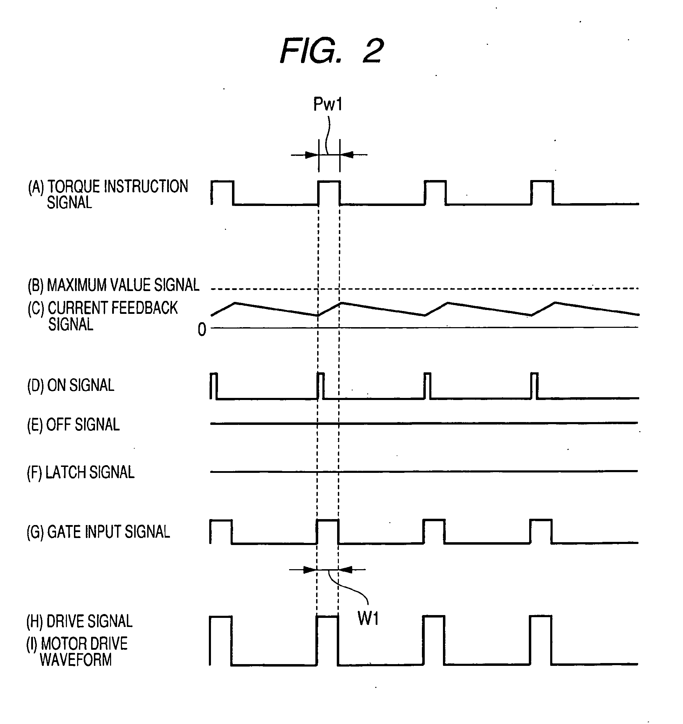

Fig. 2 is a timing chart showing examples of waveforms of various signals generated when the motor 14 is driven in a relatively low torque band. The respective examples of waveforms of various signals will be described below.

### [TORQUE INSTRUCTION SIGNAL]

(A) in Fig. 2: If the motor 14 is driven in a relatively low torque band (>0), the instruction value of torque corresponding to the torque instruction signal is small. Accordingly, the pulse width Pw1 of the torque instruction signal is also set to be small in proportion to the instruction value of torque (for example, a duty ratio of 10% or less may be used as a reference value.).

### [MAXIMUM VALUE SIGNAL]

(B) in Fig. 2: Further, if the torque instruction signal is filtered, the voltage value of the maximum value signal is also suppressed to a low level in accordance with the pulse width of the torque instruction signal.

### [CURRENT FEEDBACK SIGNAL]

(C) in Fig. 2: The voltage of the current feedback signal does not reach the voltage level of the maximum value signal in the control of a low torque band. This means that desired torque (torque corresponding to the instruction value) is obtained depending on not the drive current of the motor but only the drive voltage of the motor 14.

### [ON-SIGNAL]

(D) in Fig. 2: In this case, an ON-signal is generated in the pulse period of the torque instruction signal. Meanwhile, an ON-signal is instantaneously generated, and is turned off only by triggering the latch circuit 28.

### [OFF-SIGNAL]

(E) in Fig. 2: Since the voltage of the current feedback signal does not reach the voltage of the maximum value signal in the control of a low torque band, an OFF-signal is always kept at the maximum voltage level.

### [LATCH SIGNAL]

(F) in Fig. 2: As described above, an ON-signal is generated in the pulse period of the torque instruction signal and an OFF-signal is not lowered to the minimum voltage in the control of the low torque band. Accordingly, the latch signal is always kept in the ON-state.

### [GATE INPUT SIGNAL]

(G) in Fig. 2: Further, the gate input signal input to the AND gate 30 has the same pulse waveform as the torque instruction signal as described above.

### [DRIVE SIGNAL AND MOTOR DRIVE WAVEFORM]

(H) and (I) in Fig. 2: As a result, the pulse width of the drive signal is defined to be equal to the pulse width (W1 in Fig. 2) of the torque instruction signal (gate input signal). Furthermore, the motor drive waveform is also the same as the waveform of the drive signal.

As described above, the motor controller 10 according to this embodiment drives the motor 14 by performing a constant-voltage control phase in a relatively low torque band. Accordingly, it may be possible to generate desired torque that is instructed by the torque instruction signal.

### [CONSTANT-CURRENT CONTROL PHASE]

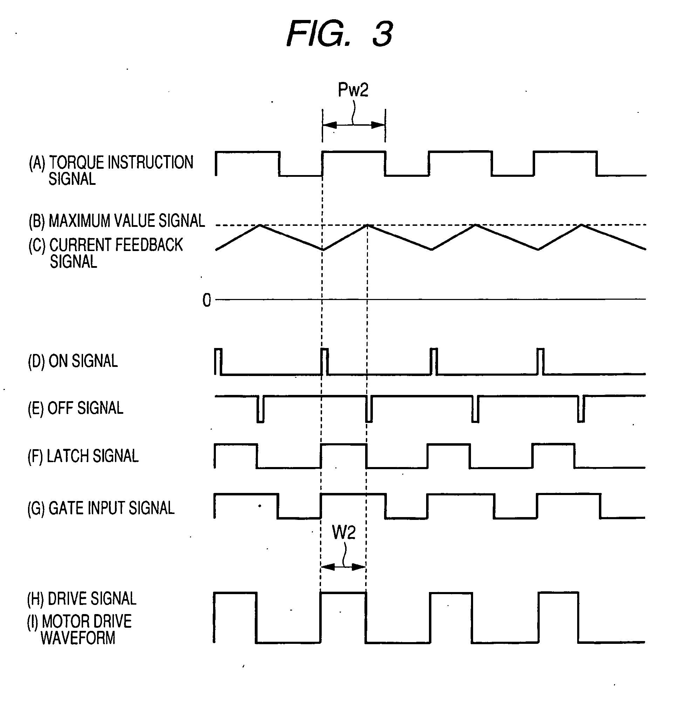

Fig. 3 is a timing chart showing examples of waveforms of various signals generated when the motor 14 is driven in a relatively high torque band. The respective examples of waveforms of various signals will be described below.

### [TORQUE INSTRUCTION SIGNAL]

(A) in Fig. 3: If the motor 14 is driven in a relatively high torque band, the instruction value of torque is larger in comparison with that in the former low torque band. Accordingly, the pulse width Pw2 of the torque instruction signal is also set to be large (for example, a duty ratio of 10% or more may be used as a reference value.).

### [MAXIMUM VALUE SIGNAL]

(B) in Fig. 3: Further, if the torque instruction signal is filtered, the voltage value of the maximum value signal is also increased to a high level in accordance with the pulse width of the torque instruction signal.

### [CURRENT FEEDBACK SIGNAL]

(C) in Fig. 3: The voltage of the current feedback signal is linearly increased as soon as power begins to be supplied, and then reaches the voltage level of the maximum value signal in the control of a high torque band. This means that desired torque (torque corresponding to the instruction value) is obtained by maintaining the drive current of the motor 14 below the maximum value (about a target value).

### [ON-SIGNAL]

(D) in Fig. 3: Meanwhile, an ON-signal is generated in the pulse period of the torque instruction signal, like the case of the low torque band.

### [OFF-SIGNAL]

(E) in Fig. 3: In the control of a high torque band, it may be possible to find out that the level of an OFF-signal is instantaneously changed into the minimum voltage level, by using the fact that the voltage of the current feedback signal reaches the voltage of the maximum value signal in the control of a high torque band.

### [LATCH SIGNAL]

(F) in Fig. 3: In the control of a high torque band, the latch signal is changed from an ON-state and kept in an OFF-state whenever the level of an OFF-signal is changed into the minimum voltage level.

### [GATE INPUT SIGNAL]

(G) in Fig. 3: Even in the control of a high torque band, the gate input signal input to the AND gate 30 has the same pulse waveform as the torque instruction signal.

### [DRIVE SIGNAL AND MOTOR DRIVE WAVEFORM]

(H) and (I) in Fig. 3: In this case, the pulse width (W2 in Fig. 3) of the drive signal is defined as a period of time between the time when the torque instruction signal (gate input signal) rises and an ON-signal is generated and the time when an OFF-signal falls. Considering this over the entire operation, it is understood that the pulse width (W2 in Fig. 3) of the drive signal is defined as a period of time between the time when power begins to be supplied to the motor 14 and the time when the voltage of the current feedback signal reaches the voltage of the maximum value signal. In other words, the pulse width of the drive signal is a period of time between the time when power begins to be supplied to the motor 14 and the time when a value of actual drive current reaches the maximum value on the control. The maximum value on the control, which is described herein, is equivalent to a value of the drive current that corresponds to the maximum value obtained by filtering the torque instruction signal with the LPF 20.

As described above, the motor controller 10 according to this embodiment drives the motor 14 by performing a constant-current control phase in a relatively high torque band. Accordingly, it may be possible to generate torque that is instructed by the torque instruction signal.

### [CONTINUITY OF CONTROL]

Any one of the two control phases of the above-mentioned control circuit 16 is naturally selected on the basis of the pulse width of the supplied torque instruction signal and the characteristics of the entire circuit, without any particular switching operations of the control phase. That is, as apparent from the circuit configuration of Fig. 1, it is understood that the control circuit 16 is not provided with any switch circuit and the control phase is performed in an analog manner.

Accordingly, even though the pulse width (duty ratio) of the torque instruction signal is gradually increased and the constant-voltage control phase is switched to the constant-current control phase in the control circuit 16, it may be possible to continuously perform a control without the losing of control or a torque step while the constant-voltage control phase is switched to the constant-current control phase.

### [VERIFICATION EXAMPLE]

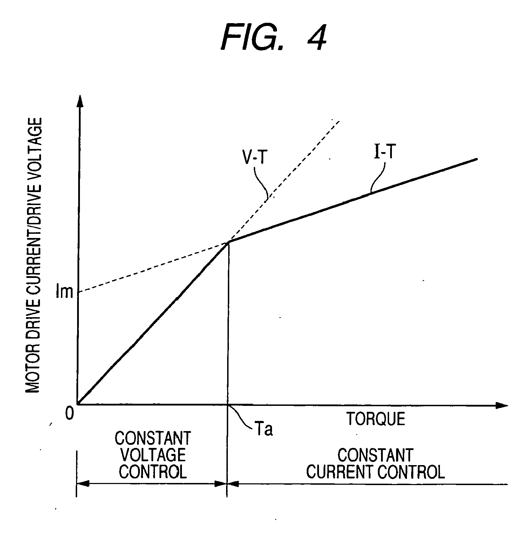

Fig. 4 is a characteristic diagram showing a relationship between generated torque and the drive current or voltage of the motor 14. In Fig. 4, a V-T curve passing through the origin is a characteristic curve that shows a relationship between the drive voltage and torque, and an I-T curve having an intercept on the vertical axis is a characteristic curve that shows a relationship between the drive current and torque. The availability of this embodiment will be verified below on the basis of this characteristic diagram.

In general, if drive current does not exceed the minimum current Im as shown by the I-T curve, the motor 14 is hardly driven. Meanwhile, the minimum current Im is determined by the mechanical characteristics (inertia, frictional resistance, and the like) or electrical characteristics of the motor 14. Accordingly, it is technically difficult to actually perform the constant current control of the motor 14 in a band where the drive current Id is lower than the minimum current Im (0<Id<Im). Meanwhile, as already described in "Related Art", there is limitation such as response delay in a band where the generated torque is lower than a certain value (Ta in Fig. 4).

In this embodiment, desired torque is generated in the motor 14 without the limitation such as the response delay by employing the constant voltage control in the torque band where the torque Td generated in the motor 14 is low (0<Td<Ta). Meanwhile, the torque of the motor 14 is simply proportional to drive voltage as shown by the V-T curve. Accordingly, in this embodiment, it might be possible to theoretically perform a control in accordance with the pulse width (>0) of the torque instruction signal even in a very low torque band (>0) close to 0.

### [APPLICATION EXAMPLE]

The motor controller 10 according to this embodiment is suitably used for an operation feeling transmitting input device. That is, when a user rotates a rotatable operating shaft by a weak force, very low torque is generated in the motor 14 connected to the operating shaft. Accordingly, delicate click feeling may be transmitted to the user. This is a preferable example using the control performance of this embodiment that is excellent in the low torque band. In addition, when relatively high torque is intended to be generated in the motor, a constant-current control phase is naturally performed and constant torque may be maintained so as to follow the dynamic load change that is caused by the switching of drive voltage, a phase, or the like. Accordingly, it may be possible to make a user feel good feeling by the same amount.

The invention is not limited to the above-mentioned embodiment, and may have various modifications. The circuit configuration of the embodiment is merely a preferred example, and the invention is not limited thereto. For example, in the embodiment, logical operation has been performed using the AND gate 30. However, if the pulse widths W1 and W2 of the drive signal may be appropriately defined in the respective control phase, other logic gates may be used. In addition, the entire configuration of the control circuit 16 including the PWM generator 18 may be substituted with one-chip microcomputer or the like.

Further, the invention is not limited to the application to an operation feeling transmitting input device, and it goes without saying that the invention may be widely used for a general-purpose motor controller.

It should be understood by those skilled in the art that various modifications, combinations, sub-combinations and alterations may occur depending on design requirements and other factors insofar as they are within the scope of the appended claims of the equivalents thereof.

## Claims

1. A motor controller comprising:
a motor drive circuit that controls power to be supplied to a motor, which is an object to be controlled, and switches the state of the motor to any one of a drive state and a non-drive state; and
a control circuit that outputs a drive signal having a pulse width, which indicates a period of time where the drive state of the motor is kept, to the motor drive circuit on the basis of an instruction value of torque generated in the motor,
wherein the control circuit sets the maximum value of drive current supplied to the motor on the basis of the instruction value, and
the control circuit has a constant-current control phase where the pulse width of the drive signal is defined as a period of time between the time when power begins to be supplied to the motor and the time when a value of actual drive current reaches the maximum value, and a constant-voltage control phase where the pulse width of the drive signal is defined to be equal to the pulse width of a modulated instruction value while the actual drive current of the motor does not reach the maximum value.

2. The motor controller according to claim 1,
wherein the control circuit performs the constant-voltage control phase in a low torque band where torque corresponding to the instruction value is obtained depending on the drive voltage of the motor even though a value of the drive current of the motor does not reach the maximum value, and performs the constant-current control phase in a high torque band where the torque corresponding to the instruction is obtained by increasing the value of the drive current of the motor to the maximum value if the torque corresponding to the instruction value is not obtained in the low torque band.

3. The motor controller according to claim 1,
wherein the control circuit includes
a PWM generator that outputs a torque instruction signal obtained through the pulse-width-modulation of the instruction value,
a filter that generates the maximum value signal indicating a voltage value corresponding to the maximum value by filtering the torque instruction signal,
a comparator that compares the maximum value signal output from the filter with a current feedback signal indicating a voltage value proportional to the actual drive current of the motor, and outputs a result signal indicating a voltage value corresponding to comparison result,
an edge extracting unit for outputting an edge extraction signal indicating that there has been a rising edge of the torque instruction signal if the torque instruction signal is input,
a latch circuit that outputs a latch signal kept in an ON-state if the edge extraction signal is input, and outputs a latch signal kept in an OFF-state if the result signal is input indicating a voltage value when the current feedback signal serving as the comparison result reaches the maximum value, and
a logic gate that outputs the drive signal in an ON-state while both the torque instruction signal and the latch signal are in the ON-state.

4. The motor controller according to claim 2,
wherein the control circuit includes
a PWM generator that outputs a torque instruction signal obtained through the pulse-width-modulation of the instruction value,
a filter that generates the maximum value signal indicating a voltage value corresponding to the maximum value by filtering the torque instruction signal,
a comparator that compares the maximum value signal output from the filter with a current feedback signal indicating a voltage value proportional to the actual drive current of the motor, and outputs a result signal indicating a voltage value corresponding to comparison result,
an edge extracting unit for outputting an edge extraction signal indicating that there has been a rising edge of the torque instruction signal if the torque instruction signal is input,
a latch circuit that outputs a latch signal kept in an ON-state if the edge extraction signal is input, and outputs a latch signal kept in an OFF-state if the result signal is input indicating a voltage value when the current feedback signal serving as the comparison result reaches the maximum value, and
a logic gate that outputs the drive signal in an ON-state while both the torque instruction signal and the latch signal are in the ON-state.
